# EUROPEAN PATENT SPECIFICATION

(11) **EP 3 308 086 B1**
(45) Date of publication and mention of the grant of the patent: **11.08.2021**
(21) Application number: 16738218.3
(22) Date of filing: 07.06.2016
(51) Int. Cl.: F25D 17/04, F16K 15/03, F16K 31/08, F16K 49/00

(54) **COMPENSATION VALVE FOR ENVIRONMENTS HAVING A PRESSURE DIFFERENT FROM THE ATMOSPHERIC ONE**
AUSGLEICHSVENTIL FÜR UMGEBUNGEN MIT EINEM VOM ATMOSPHÄRISCHEN DRUCK ABWEICHENDEN DRUCK
SOUPAPE DE COMPENSATION POUR ENVIRONNEMENTS AVEC UNE PRESSION DIFFÉRENTE DE LA PRESSION ATMOSPHÉRIQUE

(30) Priority: 11.06.2015 IT UB20151349
(43) Date of publication of application: 18.04.2018
(73) Proprietor: IK-INTERKLIMAT SPA, 20153 Milano (IT)
(72) Inventor: FABRIS, Carlo, 35013 Cittadella (PD) (IT)
(74) Representative: Ripamonti, Enrico
(86) International application number: PCT/IB2016/053324
(87) International publication number: WO 2016/199011

(56) References cited:
- EP-A2- 2 530 414
- FR-A1- 2 932 239
- US-A- 5 961 550
- US-A1- 2008 128 033
- US-A1- 2011 175 000

## Description

The subject-matter of the present invention is a compensation valve according to the preamble of the main claim.

It is known that in environments closed or delimited by walls having a pressure different from that of the external environment there is a need for using at least one compensation valve installed on at least one wall thereof and suitable for putting the inside of such delimited environments in communication with the external environment in order to balance pressure; the external environment is possibly at the atmospheric pressure. Specifically, an environment of the type indicated above is a controlled atmosphere room or the inside of a refrigerating room or a refrigerated cabinet or a simple residential room the pressure of which should be automatically controlled with respect the external environment.

In the cases mentioned above it is known the use of a compensation valve in at least one even horizontal wall (for instance a ceiling) of the delimited environment, suitable for balancing the pressure existing in such environment (for instance a refrigerating room) with the external pressure (for instance the atmospheric pressure). Since the general practice is to drill round holes in the wall in order to make the installation works simpler, the known compensation valves usually feature a hollow cylindrical body, generally closed by a grid on the side facing the environment external to the refrigerating room and completely open on the side facing the latter; such body (arranged with its axis orthogonal to the wall of the cell) includes, internally thereto, a passageway intercepted by a valve element generally and usually consisting of a flapper or panel movable with respect to the opening of such passageway. Since the latter has a cylindrical shape and a circular cross-section, the panel cannot have the shape of a circle so as to completely close/open such passageway and simultaneously be capable of moving in order to make its opening possible. Consequently, the practice is known of realizing such panel in a polygonal (for instance square) shape and to insert it into a frame located inside said passageway, presenting a (circular) portion integral with the wall of the passageway and an opening having a shape mating that of the panel; the latter is arranged, upon closing said opening, in such a way as to be perpendicular to the longitudinal axis of the passageway and parallel to the area where such opening is located. In this way, the panel can move with respect to the frame and within the passageway by rotating about one or several hinges which connect it to the frame and make it possible to open the passageway as well as to close it.

Such solution presents a number of drawbacks and in particular it requires that the movable panel, internally to the passageway, be located vertical or, as referred to the arrangement of the compensation valve which has the longitudinal axis of its own passageway orthogonal to the wall of the refrigerating cell, orthogonal to such axis and parallel to such wall. This in order to make a correct displacement of the panel itself possible.

Such positioning is necessary to make it possible an effective exploitation of the valve, but on the other hand it is restrictive with respect to the installation of the valve into the wall, an operation that requires a special attention in order to arrange the valve in such a way that the movable panel be correctly closed whenever no air flow shall exist between different environments. This closed position is also facilitated by the presence of a return spring acting onto the movable panel, a spring that might yield over time and lose its capability of offering any longer the strength necessary to held the panel closed when desired.

Another solution is also known wherein the passageway is split into two parallel channels each closed by a half-circle (also operating as an on-off control member for its respective channel) movable about a diameter of the passageway itself. In this case too, however, there is a need for arranging the valve in the hole of the wall in such a way that the half-circles be reliably closed whenever there is no air flow between the environments.

Furthermore, in this case too there is a need for using a return member for said half-circle suitable for holding it closed whenever there is no air flow between the environments. Therefore, the problems of duration of effectiveness of the spring onto its corresponding on-off control member over time still exist.

In addition, the known solutions are difficult to implement (because of the presence of one or several spring-operated on-off control members), have problems of efficiency over time, and consequently feature high costs.

Another example of a pressure compensation valve of a known type is disclosed in the Unites States patent application no. US 2008/0128033. This document concerns a valve capable of selectively lowering the pressure inside an environment whenever the pressure exceeds a predetermined value. The valve disclosed in US 2008/0128033 makes also it possible to modify the set pressure value at which the valve opens to put the environment in communication to the outside thus making the pressure of the environment decrease. This valve comprises a body and a flapper which is rotationally mounted on the body and is movable between a closed position, in which it seals the flow channel, and an open position, in which the flapper enable the flow to pass. The flapper is held in the closed position thanks to the presence of a magnet incorporated in the flapper which engages a magnetic element associated with the valve body in a position facing the magnet. The positon of the magnetic element can be modified in order to vary the distance (air gap) between it and the magnet so as to modify the electromagnetic force that holds the flapper closed. In this way, it is consequently possible to vary the pressure at which the valve opens, i.e. the pressure of the fluid necessary to overcome the electromagnetic force that keeps the flapper in the closed position.

A drawback of this valve is in that the positions of the magnet and of the magnetic element, which are placed at the highest distance from the axis of rotation about which the flapper is hinged, do not guarantee a reliable operation because in some mounting configurations of the valve the electromagnetic force is not capable of holding the flapper in the closed position at the specified pressure. In other words, the orientation of the valve in the space might affect its correct operation. For instance, if the valve is mounted on a horizontal wall, then the weight force (due to its own weight of the flaps) might sum to the force exerted by the pressurized fluid onto the flapper and cause the electromagnetic force not to be capable any longer of closing the flapper at the set pressure.

An object of the present invention is therefore to offer a compensation valve that is improved with respect to the known solutions.

Specifically, an object of the present invention is to offer a compensation valve that makes it possible an optimum and safe closing of the passageway connecting the inside of the variable pressure environment to the external environment irrespective of how is it mounted in a wall of the delimited environment.

A further object of the present invention is to offer a compensation valve that retains its own operating efficiency unchanged over time.

A further object of the invention is to provide a compensation valve of the mentioned type that does not include any return springs for its movable parts and consequently is simpler to manufacture than known valves and has lower costs as compared thereto.

These objects and others that will be apparent to those skilled in this sector are achieved by a compensation valve according to the attached claims.

For a better understanding of the present invention, the following drawings are attached for merely explanatory, not limitative, purposes, wherein:

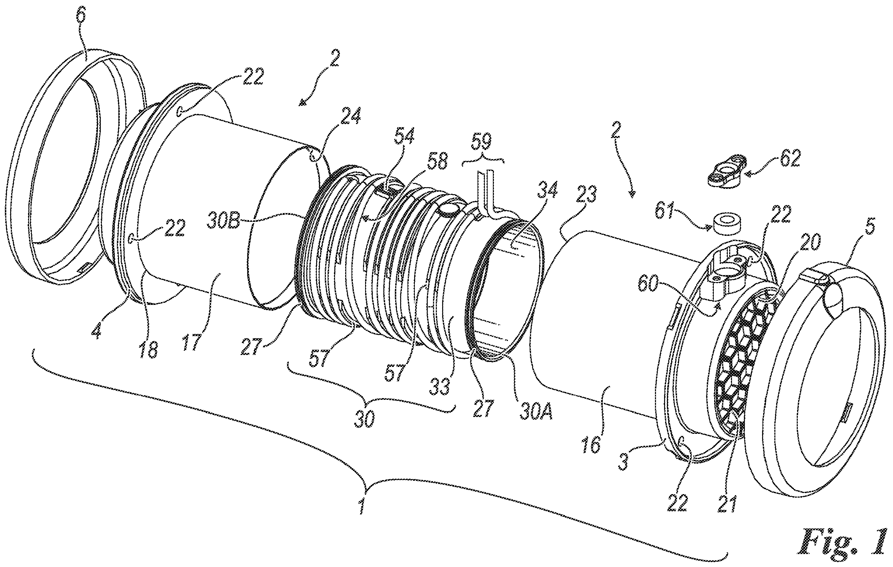

figure 1 shows an exploded perspective view of a compensation valve according to the invention;

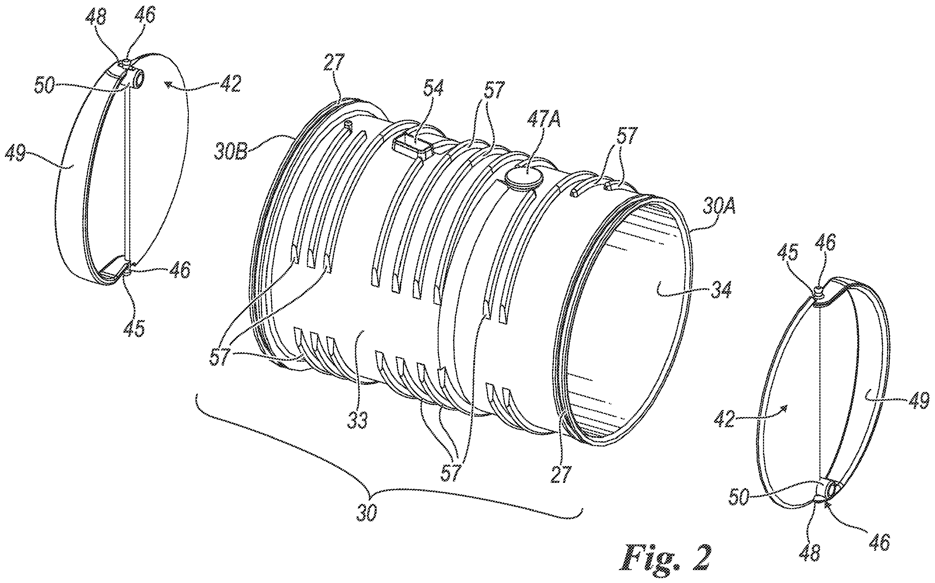

figure 2 shows an exploded perspective view of a member of the compensation valve of figure 1;

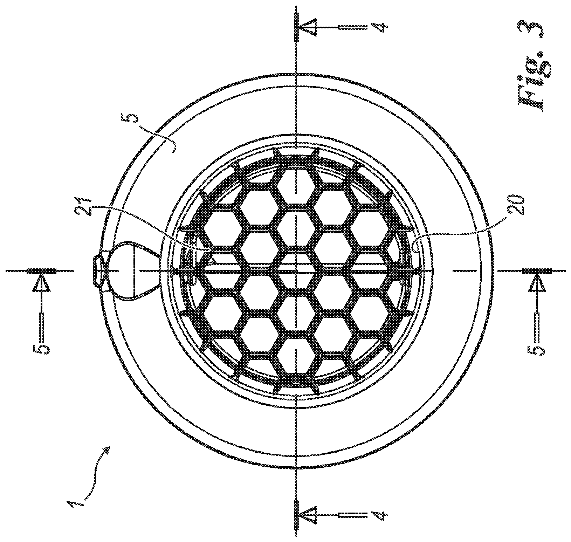

figure 3 shows a front view of the compensation valve of figure 1;

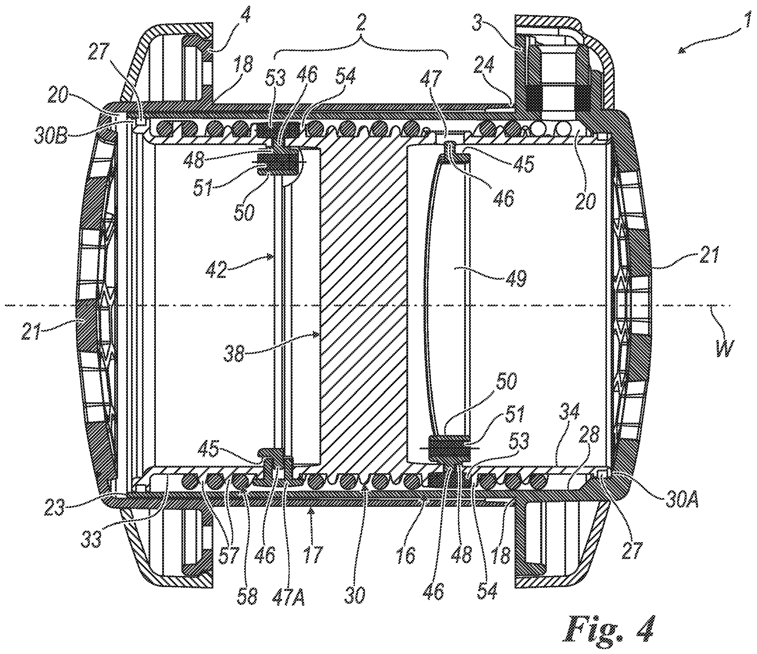

figure 4 shows a cross-sectional view of the valve of figure 1 according to the trace 4-4 of figure 3;

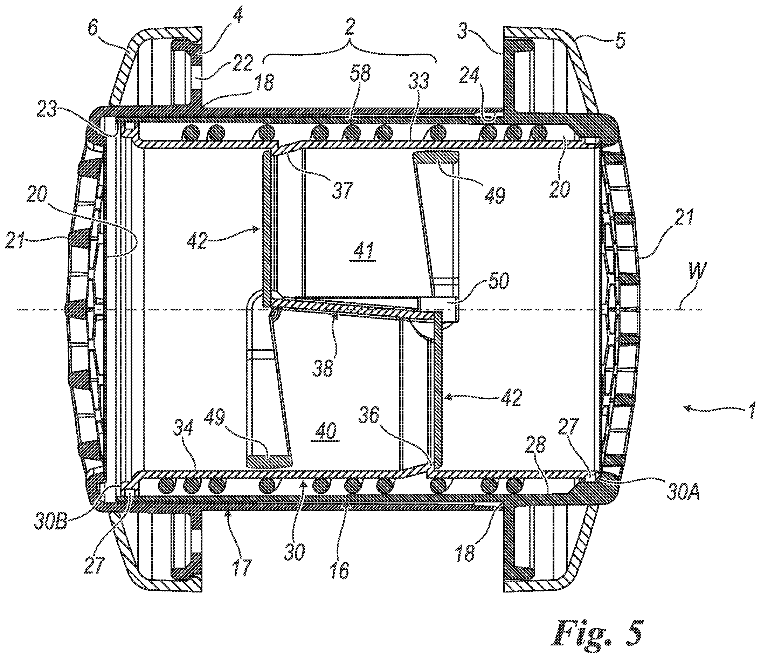

figure 5 shows a cross-sectional view according to the trace 5-5 of figure 3; and

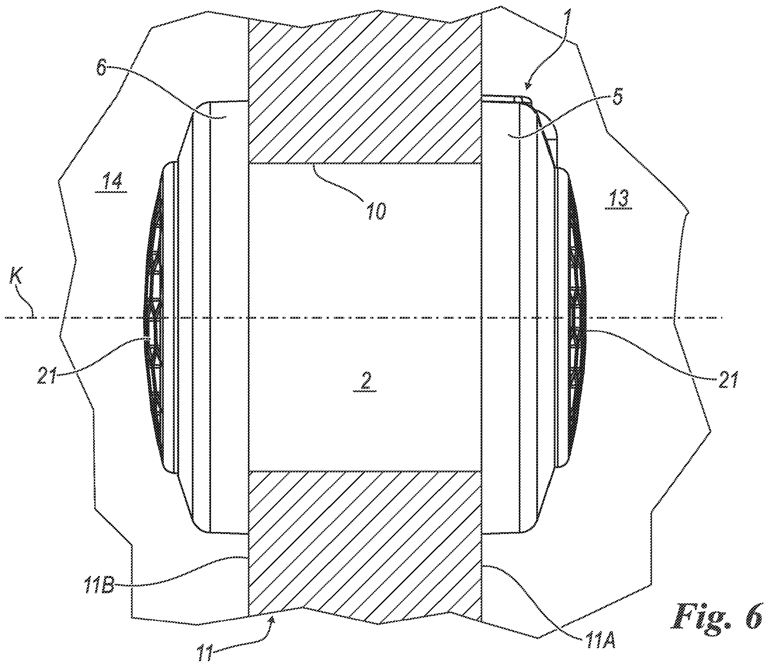

figure 6 shows a side view of the assembled valve of figure 1 in a position of use.

With reference to the mentioned figures, a compensation valve is generally referred to by the numeral 1 and comprises a hollow tubular body 2 having end flanges 3 and 4 on which covers 5 and 6 respectively are suitable for being placed (for merely aesthetic purposes). Such valve body 2 is suitable for being inserted in a through hole 10 obtained in a wall 11 which separates an environment 13, closed and delimited by its own walls, from an external environment 14. The delimited environment 13 is an environment wherein there is or at least there might be a pressure different from that of the external environment (14) which might be at the atmospheric pressure.

For merely explanatory purposes, the substantially controlled (but variable) pressure delimited environment might be a refrigerating cell, a refrigerated cabinet, a controlled environment room or even a room of a house having openings (windows or doors) on which highly airtight door or window frames are placed. In such environments the internal pressure might be different from the atmospheric one and such difference is autonomously compensated for by way of the valve 1 which allows a controlled air flow between the delimited and external environments thus allowing to regulate and make said pressure uniform.

More specifically, the valve body 2 is preferably defined by a first and second cylindrical portions 16 and 17, which are tubular and hollow and having, at a first end 18 thereof, flanges 3 and 4. At such end 18 every portion 16 and 17 presents an opening 20 on which there is placed a grid 21. In the flanges 3 and 4 there are provided holes 22 suitable for receiving binding members (for instance screws) binding the body 2 to the opposed faces 11A and 11B of the wall 11 facing the environments 13 and 14.

Preferably the cylindrical portions 16 and 17 telescopically couple to each other and have their own second ends 23 and 24 suitable for reciprocally interpenetrating: in particular, the end 23 of the portion 16 penetrates the end 24 of the portion 17. This allows to adjust the dimension of the body 2 as a function of the thickness of the wall 11 (or distance between its faces 11A and 11B). Advantageously the cylindrical portion 17, at least internally, is slightly conical and it widens as moving from the first end 18 to the second end 24.

Within the tubular body 2 there is a valve member 30 externally cylindrical-shaped and having an outer face 33 and an inner face 34. Such member 30 has opposed ends 30A and 30B having seats 27 for a seal ring (not shown) suitable for co-operating by interference with an inner surface 28 of the first cylindrical portion 16. Such co-operation holds the member 30 in position within this first portion 16. The inner face features two spaced away arched ridges 36 and 37 and an inner longitudinal wall 38 (preferably having a length equal to half circle), slightly tilted with respect to the longitudinal axis W of the member 30. Such wall determines inside the member 30 two substantially parallel channels 40 and 41 suitable for being closed, at opposed ends, by on-off control members or flappers 42. Every flapper or member 42 is substantially half-circle shaped and closes a corresponding channel 40 and 41 of a similar shape.

Every on-off control member 42 is hinged to the valve member 30 so as to be capable of rotating about an axis of rotation that is arranged transversally with respect to the longitudinal axis W of the member 30.

More specifically, every on-off control member 42 is hinged at a first end 45 thereof and at a second end 48 to the inner face 34 of the member 30 via a projecting pivot 46 inserted into a corresponding seat 47 obtained in such face or of a bowl plug 47A inserted in such seat. To said first end 45 and to the second end 48 (i.e. to the ends of the diameter of the half-circle defining the shape of the member 42) an arch 49 is connected suitable for operating as a compensator for the movement of the member 42 about said pivot 46. The arch 49 and the member 42 form one piece.

In addition, at the second end 48 there is present a seat 50 for a permanent magnet (containing ferrites or neodymium or iron cobalt) 51 suitable for co-operating with a magnetic body 53 associated with the member 30 and inserted into a seat 54 thereof. Such magnetic body 53 is either a permanent magnet or an electromagnet and its function is to attract, by way of the magnetic force only, the permanent magnet 51 of the member 42 whenever the latter rotates about the pivot 46 being pushed by the air flowing through its respective channel 40 or 41, thus opening a communication between the environments 13 and 14 via said channel. The co-operation of such magnetic elements 51 and 53 is suitable for holding the channel 40 or 41 on which every on-off control member 42 is placed, closed.

Obviously, in order to get this action, the magnetic elements 51 and 53 shall have a correct arrangement of their polarities in such a way that the magnets reciprocally attract rather than reciprocally repelling.

Note that the seats 50 and 54, intended to receive the permanent magnet 51 and the magnetic body 53 respectively, are in proximity to either pivot 46, i.e. substantially on the axis of rotation of the on-off control member 42. This causes the magnetic elements 51 and 53 to be always in proximity to each other, irrespective of the position of the on-off control member 42. An advantage of this arrangement of the magnetic elements 51 and 53 is in that the electromagnetic force always holds such an intensity as to guarantee the closing of the channels 40 and 41 by the on-off control member 42. As a matter of fact, whatever the position of the on-off control member 42 is, the magnetic elements 51 and 53 are at a reduced distance from each other, so that the return electromagnetic force always holds a high intensity, capable of guaranteeing the closing of the channels 40, 41 by the on-off control member 42.

The on-off control members or flappers 42 move in directions of rotation about the pivots 46 that are contrary to each other. In this way, only one of said channels 40 and 41 opens, when necessary, as a function of the difference of pressure existing between the environments 13 and 14. When closed, the members 42 lay against a corresponding ridge 36 or 37 of the inner face 33 of the valve member 30.

On the outer face 33 of the valve member 30 there are ribs 57 between which there are arranged the turns of a spiral electrical resistor 58 suitable for heating the member 30 and preventing ice from built-up as air flows therethrough (when the compensation valve 1 is used in association with a refrigerating cell or a refrigerated cabinet). Such resistor has ends 59 that are received in a seat 60 of the first cylindrical portion 16 (in the embodiment here described) where they are enveloped by a seal ring 61 and pressed by a usual compression gland 62 co-operating with such seat 60. Obviously, the electrical resistor might even be of another type and shape, for instance a sheet resistor.

Thanks to the invention and to the co-operation between the bodies or magnetic elements 51 and 53 described above, every on-off control member is normally brought to the closed position of its corresponding channel 40 or 41 irrespective of the spatial orientation (vertical, horizontal, tilted) of such member with respect to the axis K of the hole 10 in which the valve 1 is placed. Consequently, this allows a simpler and faster mounting of the valve into such hole.

In addition, thanks to the attraction magnetic force between the bodies or elements 51 and 53, every on-off control member is suitable for closing its own channel 40 or 41 without any need for using springs that might yield over time and consequently lose their effectiveness.

The force necessary to close every channel 40 and 41 by way of rotation of the flappers 42 is not affected by the orientation of the valve internally to the hole 10 where the valve is inserted. Such important advantage is also due to the geometry of every flapper 42 whose centre of mass (or centre of gravity) lays on the axis of rotation thereof (which joins the pivots 46 to each other).

Furthermore, the valve according to the invention features a very reliable operation thanks to the position of the magnetic elements 51 and 53 in proximity to the axis of rotation of the on-off control member 42. This makes the magnetic elements 51 and 53 always be at a reduced distance from each other irrespective of the position of the on-off control member 42 so that the electromagnetic force therebetween always maintains an appropriate intensity to guarantee the closing of the on-off control member 42 regardless of the orientations of the valve 1 in the space (i.e. irrespective of whether it is mounted on a horizontal, vertical, or oblique wall).

Note that in some applications, for instance those described above wherein the valve separates a refrigerating room from an external environment, it is very important that the valve 1 does not remain open because, in this event, ice might build-up and obstruct the valve and prevent the correct operation thereof. Everybody can consequently appreciate the importance of having a valve featuring an extremely reliable operation.

In addition, the valve here described is easy to implement. Furthermore, the above mentioned magnetic force necessary for the attraction feature can be calibrated by using magnets 51 and 53 (or equivalent electrical members) having appropriate dimensions as a function of the dimensions of every on-off control member 42. Thanks to this dimensioning it is also possible to set an air pressure threshold beyond which the member 42 opens its respective channel 40 and 41; this also allows to get a constant value between the air flowrate/air pressure of the channel and the moment when the member 42 moves thus opening the channel and releasing the air flow between the environments 13 and 14.

Finally, the arch 49 operating as a compensator is also sized as a function of the geometry of the on-off control member to hold the centre of mass on the axis of rotation thereof.

A preferred embodiment of the invention has been described. However, others are possible: for instance, one channel only might be provided within the valve member 30 on which one (only) corresponding on-off control member is placed; such solution might be convenient whenever it is required to have an air flow between the environments 13 and 14 that is always unidirectional. These solutions are also to be considered to fall in the scope of the invention as defined by the attached claims.

## Claims

1. A compensation valve suitable for balancing the pressure of a delimited environment (13), in which there is a pressure different from that of an external environment (14), for instance an environment at the atmospheric pressure, such delimited environment being closed by walls,
the compensation valve comprising a tubular body (2) suitable for being inserted in a through hole (10) provided in at least one (11) of said walls,
the tubular body (2) having:
- a valve member (30) comprising at least one internal channel (40, 41) suitable for putting such environments (13, 14) in communication to each other,
- a movable on-off control member (42) provided for alternatively intercepting and closing said at least one internal channel (40, 41) or opening it as a function of the difference of pressure existing between said delimited environment (13) and said external environment (14), said on-off control member (42) being hinged to said valve member (30),
- wherein magnetic means (51, 53) are provided associated with said on-off control member (42) and with said valve member (30) respectively for bringing said on-off control member (42) to a closing position of said at least one internal channel (40, 41) by countering a thrust force exerted by the air flowing through the channel (40, 41) from one environment to the other,
- the magnetic means comprises a permanent magnet (51) associated with an end (48) of said on-off control member (42) and an element generating a magnetic field (53) associated with the valve member (30), in a position close to said end (48) of said on-off control member (42), said element generating a magnetic field being a permanent magnet or an electromagnet
**characterized in that**
the element generating a magnetic field (53) associated with the valve member (30) is inserted in a seat (54) of the valve member (30), placed in proximity to a seat (47) for a rotation pivot (46) connecting the on-off control member (42) to the valve member (30),
wherein said on-off control member (42) has such a geometry that the centre of mass of said on-off control member (42) lays on its own axis of rotation.

2. A compensation valve according to claim 1, **characterized in that** the valve member (30) is inserted in the hollow tubular body (2) and is secured therein.

3. A compensation valve according to claim 1, **characterized in that** said valve member (30) comprises two internal channels (40, 41), located parallel to each other and separated by a wall (38) internal to said valve member (30), an on-off control member (42) being in correspondence with each channel (40, 41), suitable for closing/opening its corresponding channel (40, 41).

4. A compensation valve according to claim 3, **characterized in that** the on-off control members (42) are placed at opposed ends of the internal channels (40, 41) of the valve member (30) and are hinged to an inner face (34) of the valve member (30), said on-off control members (42) rotating in said internal channels (40, 41) in opposed directions so that only one of the internal channels (40, 41) opens to put the delimited environment (13) in communication to the external environment (14) as a function of the difference of the pressure existing therebetween.

5. A compensation valve according to claim 1, **characterized in that** said permanent magnet (51) associated with the on-off control member (42) and said element generating a magnetic field (53) associated with the valve member (30) have such polarities as to hold the on-off control member in a closing position of its corresponding channel (40, 41).

6. A compensation valve according to claim 4, **characterized in that** said seat (47) for the rotation pivot (46) is provided within the inner face (34) of the valve member (30), said on-off control member (42) having a second rotation pivot (46) associated with another end (45) opposed to that in proximity to which the permanent magnet (51) is present, said second rotation pivot (46) co-operating with a seat provided in a bowl plug (47A) placed within the inner face (34) of said valve member (30).

7. A compensation valve according to claim 1, **characterized in that** said on-off control member (42) is substantially half-circle shaped and an arched body (49) departs from the ends of the latter acting as a compensator for the movement of the on-off control member (42), said on-off member (42) and said arched body forming one piece, the centre of mass of the on-off control member (42) and arched body assembly lying on the axis of rotation of the on-off control member.

8. A compensation valve according to any of the preceding claims, **characterized in that** the tubular body (2) of the compensation valve (1) is telescopic and comprises a first and second telescopically coupled portions (16, 17).

9. A compensation valve according to any of the preceding claims, **characterized in that** the valve member (30) is coupled by interference to, and is secured within, the tubular body (2) of the compensation valve (1).

10. A compensation valve according to any of the preceding claims, **characterized in that** an inner face (34) of the valve member (30) has at least one arched ridge (36, 37) suitable for operating as a support for said on-off control member (42) whenever it is in such a position as to close its corresponding channel (40, 41).

11. A compensation valve according to any of the preceding claims, **characterized in that** the valve member (30) has an electrical resistor (58) on an outer face (33).

12. A compensation valve according to claim 11, **characterized in that** said outer face (33) of the valve member (30) has a plurality of projecting ribs (57) suitable for spacing away from each other turns of a spiral electrical resistor (58) located on the outer face (33) thereof.

## Patentansprüche

1. Ein Kompensationsventil, das geeignet ist, den Druck einer begrenzten Umgebung (13) auszugleichen, in der ein Druck herrscht, der sich von dem einer äußeren Umgebung (14), beispielsweise einer Umgebung mit atmosphärischem Druck, unterscheidet, wobei eine solche begrenzte Umgebung durch Wände geschlossen ist, wobei das Kompensationsventil einen rohrförmigen Körper (2) umfasst, der geeignet ist, in ein Durchgangsloch (10) eingesetzt zu werden, das in mindestens einer (11) der Wände vorgesehen ist,
wobei der rohrförmige Körper (2) Folgendes aufweist:
- ein Ventilelement (30), das mindestens einen inneren Kanal (40, 41) umfasst, der geeignet ist, solche Umgebungen (13, 14) miteinander in Kommunikation zu setzen,
- ein bewegliches Ein-Aus-Steuerelement (42), das vorgesehen ist, um alternativ den mindestens inneren Kanal (40, 41) zu unterbrechen oder zu schließen oder ihn in Abhängigkeit von der Druckdifferenz zu öffnen, die zwischen der begrenzten Umgebung (13) und der äußeren Umgebung (14) besteht, wobei das Ein-Aus-Steuerelement (42) an dem Ventilelement (30) angelenkt ist,
- wobei magnetische Mittel (51, 53) vorgesehen sind, die mit dem Ein-Aus-Steuerelement (42) bzw. mit dem Ventilelement (30) verbunden sind und das Ein-Aus-Steuerelement (42) entgegen einer Schubkraft, die von der durch den Kanal (40, 41) strömenden Luft von einer Umgebung zur anderen wirkt, den mindestens inneren Kanals (40, 41) in eine Schließposition bringt,
- das magnetische Mittel umfasst einen Permanentmagneten (51), der mit einem Ende (48) des Ein-Aus-Steuerelements (42) verbunden ist, und ein Element, das ein Magnetfeld (53) für das Ventilelement (30) erzeugt, in einer Position nahe dem Ende (48) des Ein-Aus-Steuerelements (42), wobei das Element als Permanentmagnet oder Elektromagnet ein Magnetfeld erzeugt,
**dadurch gekennzeichnet, dass**
das Magnetfeld (53) erzeugende Element, das dem Ventilelement (30) zugeordnet ist, in einen Sitz (54) des Ventilelements (30) eingesetzt ist, der in der Nähe eines Sitzes (47) für einen Drehzapfen (46) angeordnet ist, der das Ein-Aus-Steuerelement (42) mit dem Ventilelement (30) verbindet,
wobei das Ein-Aus-Steuerelement (42) eine solche Geometrie aufweist, dass der Massenschwerpunkt des Ein-Aus-Steuerelements (42) auf seiner eigenen Drehachse liegt.

2. Kompensationsventil gemäß Anspruch 1, **dadurch gekennzeichnet, dass** das Ventilelement (30) in den rohrförmigen Hohlkörper (2) eingesetzt und darin befestigt ist.

3. Kompensationsventil gemäß Anspruch 1, **dadurch gekennzeichnet, dass** das Ventilelement (30) zwei innere Kanäle (40, 41) umfasst, die parallel zueinander angeordnet und durch eine Wand (38) innerhalb des Ventilelements (30) getrennt sind, wobei ein Ein-Aus-Steuerelement (42) mit jedem Kanal (40, 41) assoziiert ist, der für das Schließen/Öffnen des entsprechenden Kanals (40, 41) geeignet ist.

4. Kompensationsventil gemäß Anspruch 3, **dadurch gekennzeichnet**, die Ein-Aus-Steuerelemente (42) an gegenüberliegenden Enden der inneren Kanäle (40, 41) des Ventilelements (30) angeordnet und an einer Innenfläche (34) des Ventilelements (30) angelenkt sind, wobei sich die Ein-Aus-Steuerelemente (42) in den inneren Kanälen (40, 41) in entgegengesetzten Richtungen drehen, so dass nur einer der inneren Kanäle (40, 41) öffnet, um die begrenzte Umgebung (13) mit der äußeren Umgebung (14) in Abhängigkeit von der Differenz des dazwischen herrschenden Drucks zu verbinden.

5. Kompensationsventil gemäß Anspruch 1, **dadurch gekennzeichnet, dass** der Permanentmagnet (51), der dem Ein-Aus-Steuerelement (42) zugeordnet ist, und das ein Magnetfeld (53) erzeugende Element, das dem Ventilelement (30) zugeordnet ist, solche Polaritäten aufweisen, dass sie das Ein- Aus-Steuerelement in einer Schließposition des entsprechenden Kanals (40, 41) halten.

6. Kompensationsventil gemäß Anspruch 4, **dadurch gekennzeichnet, dass** der Sitz (47) für den Drehzapfen (46) innerhalb der Innenfläche (34) des Ventilelements (30) vorgesehen ist, wobei das Ein-Aus-Steuerelement (42) einen zweiten Drehzapfen (46) aufweist, der einem anderen Ende (45) zugeordnet ist, das demjenigen gegenüberliegt, in dessen Nähe sich der Permanentmagnet (51) befindet, wobei der zweite Drehzapfen (46) mit einem Sitz zusammenwirkt, der in einem innerhalb der Innenfläche (34) des Ventilelements (30) angeordneten Schalenstopfen (47A) vorgesehen ist.

7. Kompensationsventil gemäß Anspruch 1, **dadurch gekennzeichnet, dass** das Ein-Aus-Steuerelement (42) im Wesentlichen halbkreisförmig ist und von dessen Enden ein bogenförmiger Körper (49) ausgeht, der als Kompensator für die Bewegung des Ein- Aus-Steuerelementes (42) wirkt, wobei das Ein-Aus-Steuerelement (42) und der bogenförmige Körper ein Teil bilden und der Massenschwerpunkt des Ein-Aus- Steuerelements (42) und des bogenförmigen Körpers auf der Drehachse des Ein-Aus- Steuerelements liegt.

8. Kompensationsventil gemäß einem der vorhergehenden Ansprüche, **dadurch gekennzeichnet, dass** der rohrförmige Körper (2) des Kompensationsventils (1) teleskopierbar ist und einen ersten und einen zweiten teleskopisch gekoppelten Abschnitt (16, 17) aufweist.

9. Kompensationsventil gemäß einem der vorhergehenden Ansprüche, **dadurch gekennzeichnet, dass** das Ventilelement (30) durch Interferenz mit dem rohrförmigen Körper (2) des Kompensationsventils (1) gekoppelt ist und in diesem befestigt ist.

10. Kompensationsventil gemäß einem der vorhergehenden Ansprüche, **dadurch gekennzeichnet, dass** eine Innenfläche (34) des Ventilelements (30) mindestens eine gewölbte Erhebung (36, 37) aufweist, die geeignet ist, als Stütze für das Ein-Aus-Steuerelement (42) zu wirken, wenn es sich in einer solchen Position befindet, dass es den entsprechenden Kanal (40, 41) schließt.

11. Kompensationsventil gemäß einem der vorhergehenden Ansprüche, **dadurch gekennzeichnet, dass** das Ventilelement (30) an einer Außenfläche (33) einen elektrischen Widerstand (58) aufweist.

12. Kompensationsventil gemäß Anspruch 11, **dadurch gekennzeichnet, dass** die Außenfläche (33) des Ventilelements (30) eine Vielzahl von vorstehenden Rippen (57) aufweist, die geeignet sind, Windungen eines spiralförmigen elektrischen Widerstands (58), der sich auf der Außenfläche (33) desselben befindet, im Abstand voneinander anzuordnen.

## Revendications

1. Soupape de compensation appropriée pour équilibrer la pression d'un environnement délimité (13), dans lequel la pression existante est différente de celle d'un environnement externe (14), par exemple un environnement dont la pression est atmosphérique, cet environnement délimité étant fermé par des parois, la soupape de compensation comprenant un corps tubulaire (2) adapté pour être inséré dans un trou débouchant (10) prévu dans au moins une (11) desdites parois, le corps tubulaire (2) ayant :
- un élément de soupape (30) comprenant au moins un canal interne (40, 41) approprié pour mettre ces environnements (13, 14) en communication l'un avec l'autre,
- un élément de commande marche-arrêt mobile (42) prévu pour intercepter et fermer alternativement ledit au moins un canal interne (40, 41) ou l'ouvrir en fonction de la différence de pression existant entre ledit environnement délimité (13) et ledit environnement externe (14), ledit élément de commande marche-arrêt (42) étant articulé sur ledit élément de soupape (30),
- dans lequel des moyens magnétiques (51, 53) sont fournis, associés audit élément de commande marche-arrêt (42) et audit élément de soupape (30) respectivement, pour amener ledit élément de commande marche-arrêt (42) à une position de fermeture dudit au moins un canal interne (40, 41) en contrant une force de poussée exercée par l'air s'écoulant à travers le canal (40, 41) d'un environnement à l'autre,
- le moyen magnétique comprend un aimant permanent (51) associé à une extrémité (48) dudit élément de commande marche-arrêt (42) et un élément générant un champ magnétique (53) associé avec l'élément de soupape (30), dans une position proche de ladite extrémité (48) dudit élément de commande marche-arrêt (42), ledit élément générant un champ magnétique étant un aimant permanent ou un électroaimant,
**caractérisé en ce que** l'élément générant un champ magnétique (53) associé à l'élément de soupape (30) est inséré dans un siège (54) de l'élément de soupape (30), placé à proximité d'un siège (47) pour un pivot de rotation (46) reliant l'élément de commande marche-arrêt (42) à l'élément de soupape (30), dans lequel ledit élément de commande marche-arrêt (42) a une géométrie permettant que le centre de masse dudit élément de commande marche-arrêt (42) se trouve sur son propre axe de rotation.

2. Soupape de compensation selon la revendication 1, **caractérisée en ce que** l'élément de soupape (30) est inséré dans le corps tubulaire creux (2) et est fixé dans celui-ci.

3. Soupape de compensation selon la revendication 1, **caractérisée en ce que** ledit élément de soupape (30) comprend deux canaux internes (40, 41), situés parallèlement l'un à l'autre et séparés par une paroi (38) interne audit élément de soupape (30), un élément de commande marche-arrêt (42) étant en correspondance avec chaque canal (40, 41), approprié pour fermer/ouvrir son canal correspondant (40, 41).

4. Soupape de compensation selon la revendication 3, **caractérisée en ce que** les éléments de commande marche-arrêt (42) sont placés aux extrémités opposées des canaux internes (40, 41) de l'élément de soupape (30) et sont articulés sur une face interne (34) de l'élément de soupape (30), lesdits éléments de commande marche-arrêt (42) tournant dans lesdits canaux internes dans des directions opposées de sorte qu'un seul de l'un des canaux internes (40, 41) s'ouvre pour mettre l'environnement délimité (13) en communication avec l'environnement externe (14) en fonction de la différence de pression existante entre eux.

5. Soupape de compensation selon la revendication 1, **caractérisée en ce que** ledit aimant permanent (51) associé à l'élément de commande marche-arrêt (42) et ledit élément générant un champ magnétique (53) associé à l'élément de soupape (30) ont des polarités permettant de maintenir l'élément de commande marche-arrêt dans une position de fermeture de son canal correspondant (40, 41).

6. Soupape de compensation selon la revendication 4, **caractérisée en ce que** ledit siège (47) du pivot de rotation (46) est fourni dans la face interne (34) de l'élément de soupape (30), ledit élément de commande marche-arrêt (42) ayant un deuxième pivot de rotation (46) associé à une autre extrémité (45) opposée à celle à proximité de laquelle l'aimant permanent (51) est présent, ledit deuxième pivot de rotation (46) coopérant avec un siège prévu dans un bouchon de cuvette (47A) disposé dans la face interne (34) dudit élément de soupape (30).

7. Soupape de compensation selon la revendication 1, **caractérisée en ce que** ledit élément de commande marche-arrêt (42) a sensiblement la forme d'un demi-cercle et un corps arqué (49) part des extrémités de ce dernier agissant comme un compensateur du mouvement de l'élément de commande marche-arrêt (42), ledit élément marche-arrêt (42) et ledit corps arqué formant une seule pièce, le centre de masse de l'ensemble élément de commande marche-arrêt (42) et corps arqué se trouvant sur l'axe de rotation de l'élément de commande marche-arrêt.

8. Soupape de compensation selon l'une quelconque des revendications précédentes, **caractérisée en ce que** le corps tubulaire (2) de la soupape de compensation (1) est télescopique et comprend une première et une deuxième parties (16, 17) couplées de manière télescopique.

9. Soupape de compensation selon l'une quelconque des revendications précédentes, **caractérisée en ce que** l'élément de soupape (30) est couplé par interférence au corps tubulaire (2) de la soupape de compensation (1) et est fixé à l'intérieur de celui-ci.

10. Soupape de compensation selon l'une quelconque des revendications précédentes, **caractérisée en ce qu'**une face interne (34) de l'élément de soupape (30) comprend au moins une arête arquée (36, 37) appropriée pour fonctionner comme support pour ledit élément de commande marche-arrêt (42) lorsqu'il est dans une position telle qu'il ferme son canal correspondant (40, 41).

11. Soupape de compensation selon l'une quelconque des revendications précédentes, **caractérisée en ce que** l'élément de soupape (30) comprend une résistance électrique (58) sur une face extérieure (33).

12. Soupape de compensation selon la revendication 11, **caractérisée en ce que** ladite face extérieure (33) de l'élément de soupape (30) comprend une pluralité de nervures saillantes (57) appropriées pour espacer les unes des autres les spires d'une résistance électrique en spirale (58) située sur la face extérieure (33) de celle-ci.
